# EUROPÄISCHE PATENTANMELDUNG

(11) **EP 4 109 724 A1**
(43) Veröffentlichungstag der Anmeldung: **28.12.2022**
(21) Anmeldenummer: 22177725.3
(22) Anmeldetag: 08.06.2022
(51) Int. Cl.: H02M 1/00, H02M 3/335, H02M 1/10

(54) **GLEICHSPANNUNGSWANDLER UND BETRIEBSVERFAHREN FÜR EINE VERSORGUNGSSTATION**

(30) Priorität: 23.06.2021 DE 102021116287
(71) Anmelder: Compleo Charging Solutions AG, 44309 Dortmund (DE)
(72) Erfinder: Turki, Faical, 59174 Kamen (DE)
(74) Vertreter: Wickord, Wiro

(57) **Zusammenfassung**

Die Erfindung betrifft einen Gleichspannungswandler für eine elektrische Versorgungsstation umfassend einen Transformator (2) zur galvanischen Trennung einer Primärseite (1) des Transformators (2) von einer Sekundärseite (3), wobei die Primärseite (1) an einen Wechselrichter angeschlossen ist, über den eine Wechselspannung an einer primärseitigen Wicklung (2.1) des Transformators (1) bereitgestellt ist, wobei sekundärseitig drei zueinander parallele Sekundärbrückenzweige (3.1, 3.2, 3.3) vorgesehen sind, wobei ein erster Sekundärbrückenzweig (3.1) zwei in Reihe verschaltete Halbleiterschaltelemente (3.9, 3.10), ein zweiter Sekundärbrückenzweig (3.2) zwei in Reihe verschaltete Halbleiterbauelemente (3.9, 3.10) und ein dritter Sekundärbrückenzweig (3.2) zwei in Reihe verschaltete Kondensatoren (3.13, 3.14) vorsieht und wobei eine sekundärseitige Wicklung (2.2) des Transformators (2) mit einem Mittelpunkt (3.4) des ersten Sekundärbrückenzweigs (3.1) einerseits und einem Mittelpunkt (3.5) des zweiten Sekundärbrückenzweigs (3.2) anderseits verbunden ist und wobei zwischen dem Mittelpunkt (3.5) des zweiten Sekundärbrückenzweigs (3.2) und einem Mittelpunkt (3.6) des dritten Sekundärbrückenzweigs (3.3) ein Verbindungsleitungsstrang (3.7) vorgesehen ist und der Verbindungsleitungsstrang (3.7) ein Schaltelement (3.8) vorsieht zum wahlweisen Herstellen und Trennen einer Verbindung zwischen diesen Mittelpunkten (3.5, 3.6). Ferner betrifft die Erfindung ein Verfahren zum Betreiben einer elektrischen Versorgungsstation mit dem Gleichspannungswandler.

## Beschreibung

Die Erfindung betrifft einen Gleichspannungswandler für eine elektrische Versorgungsstation. Ferner betrifft die Erfindung ein Verfahren zum Betreiben einer elektrischen Versorgungsstation mit dem Gleichspannungswandler sowie die Verwendung des Gleichspannungswandlers in einer zur Bereitstellung elektrischer Energie für ein elektrisch betreibbares Fahrzeug eingerichteten Ladestation.

Moderne, mit elektrischer Energie betreibbare Fahrzeuge nutzen heute unterschiedliche Ladespannungen. Eine erste Gruppe von Fahrzeugen wird bei Spannungen im Bereich von etwa 200 V bis 500 V geladen. Eine zweite Gruppe von Fahrzeugen nutzt höhere Spannungen von bis zu 1.500 V. Vorrichtungsseitig ist dafür Sorge zu tragen, dass beliebige Fahrzeuge unabhängig von ihrer Ladespannung an ein und derselben Versorgungs- beziehungsweise Ladestation geladen werden können.

Die Bereitstellung sehr unterschiedlicher Ladespannungen in dem gesamten Spannungsintervall von zirka 200 V bis etwa 1.500 V ist schaltungsseitig nicht trivial. Bekannt ist hierzu aus der EP 3 466 750 A1 die Reihenschaltung eines ersten Gleichspannungswandlers mit einem zweiten Gleichspannungswandler. Während der erste Gleichspannungswandler die galvanische Trennung bereitstellt, dient der zweite Gleichspannungswandler als Gleichstromsteller für die Ladestation.

Aufgabe der vorliegenden Erfindung ist es, einen einstufigen Gleichspannungswandler sowie ein Betriebsverfahren für eine elektrische Versorgungsstation mit einem derartigen Gleichspannungswandler anzugeben.

Zur Lösung der Aufgabe weist die Erfindung die Merkmale des Patentanspruchs 1 auf.

Demzufolge umfasst der Gleichspannungswandler einen Transformator zur galvanischen Trennung einer Primärseite des Transformators von einer Sekundärseite desselben. Die Primärseite des Transformators ist an einen Wechselrichter angeschlossen ist. Der Wechselrichter stellt eine Wechselspannung an einer primärseitigen Wicklung des Transformators bereit. Sekundärseitig sind drei zueinander parallele Sekundärbrückenzweige vorgesehen. Ein erster Sekundärbrückenzweig sieht zwei in Reihe verschaltete Halbleiterschaltelemente, ein zweiter Sekundärbrückenzweig zwei in Reihe verschaltete Halbleiterbauelemente und ein dritter Sekundärbrückenzweig zwei in Reihe verschaltete Kondensatoren vor. Eine sekundärseitige Wicklung des Transformators ist mit einem Mittelpunkt des ersten Sekundärbrückenzweigs einerseits und einem Mittelpunkt des zweiten Sekundärbrückenzweigs andererseits verbunden. Darüber hinaus ist sekundärseitig zwischen dem Mittelpunkt des zweiten Sekundärbrückenzweigs einerseits und einem Mittelpunkt des dritten Sekundärbrückenzweigs andererseits ein Verbindungsleitungsstrang vorgesehen. In dem Verbindungsleitungsstrang ist ein Schaltelement angeordnet zum wahlweisen Herstellen beziehungsweise Trennen einer elektrischen Verbindung zwischen dem Mittelpunkt des zweiten Sekundärbrückenzweigs und dem Mittelpunkt des dritten Sekundärbrückenzweigs.

Der besondere Vorteil der Erfindung besteht darin, dass mittels des Gleichspannungswandlers ein sehr großer Spannungsbereich von etwa 200 V bis zirka 1.500 V abgedeckt werden kann. Dabei liegt die an der sekundärseitigen Wicklung des Transformators anliegende Spannung bei geöffnetem Schaltelement im Verbindungsleitungsstrang gemeinsam über den in Reihe verschalteten Kondensatoren des dritten Sekundärbrückenzweigs an. Ausgangsseitig stellt der Gleichspannungswandler demzufolge ein durch die Spannung der sekundärseitigen Wicklung vorgegebenes erstes Spannungsniveau zur Verfügung. Wird demgegenüber das Schaltelement im Verbindungsleitungsstrang geschlossen, liegt die sekundärseitig am Transformator bereitgestellte Spannung über jedem einzelnen Kondensator im dritten Sekundärbrückenzweig an. Durch die Reihenschaltung der Kondensatoren ist dann ausgangsseitig ein zweites Spannungsniveau bereitgestellt, welches doppelt so hoch ist wie das erste Spannungsniveau. Die Konfiguration des Gleichspannungswandlers kann demzufolge so gewählt werden, dass bei geöffnetem Schaltelement im Verbindungsleitungsstrang eine Spannung von bis zu 750 V und bei geschlossenem Schaltelement eine doppelt so hohe Spannung, das heißt eine Spannung von bis zu 1.500 V bereitgestellt ist. Fahrzeugtypen mit sehr unterschiedlichen Ladespannungen können demzufolge an der gleichen Ladestation geladen beziehungsweise an die gleiche Versorgungsstation angeschlossen werden. Diese kann einen einzigen, jedoch schaltbaren Gleichspannungswandler vorsehen. Der Gleichspannungswandler kann mit dem Schaltelement vergleichsweise kostengünstig hergestellt werden. Darüber hinaus baut der erfindungsgemäße Gleichspannungswandler klein und kompakt.

Nach einer bevorzugten Ausführungsform der Erfindung ist ein Relais oder ein Schütz als Schaltelement in dem Verbindungsleitungsstrang vorgesehen. Vorteilhaft können über das Relais beziehungsweise Schütz hohe Leistungen übertragen werden. Die vergleichsweise geringe Schaltfrequenz des Relais beziehungsweise Schützes fällt demgegenüber wenig ins Gewicht, da das Spannungsniveau des Gleichspannungswandlers nur einmal pro Ladevorgang eingestellt werden muss. Alternativ kann ein Halbleiterschaltelement als Schaltelement in dem Verbindungsleitungsstrang vorgesehen sein.

Nach einer Weiterbildung der Erfindung sind die Kondensatoren in dem dritten Sekundärbrückenzweig baugleich ausgeführt und besitzen eine gleiche Kapazität. Durch die Verwendung der baugleichen Kondensatoren reduziert sich die Komplexität des Gleichspannungswandlers und durch die Verwendung von Gleichteilen können die Kosten weiter reduziert werden.

Nach einer Weiterbildung der Erfindung sind in dem zweiten Sekundärbrückenzweig Dioden als Halbleiterbauelemente vorgesehen. Sie bilden zusammen mit den Halbleiterschaltelementen des ersten Sekundärbrückenzweigs eine Vollbrücke, über die die Leistung bei geöffnetem Schaltelement übertragen wird.

Nach einer Weiterbildung der Erfindung sieht der primärseitige Wechselrichter eine aktive Brücke vor mit zwei zueinander parallelen Primärbrückenzweigen und zwei in Reihe verschalteten Halbleiterbauelementen je Primärbrückenzweig. Bevorzugt ist die primärseitige Wicklung des Transformators mit einem Mittelpunkt eines ersten Primärbrückenzweigs einerseits und einem Mittelpunkt eines zweiten Primärbrückenzweigs anderseits verbunden.

Nach einer Weiterbildung der Erfindung sind primärseitig Halbleiterschaltelemente als Halbleiterbauelemente in dem ersten Primärbrückenzweig und/oder dem zweiten Primärbrückenzweig vorgesehen. Die Halbleiterschaltelemente definieren gemeinsam eine Vollbrücke. Alternativ kann ein Primärbrückenzweig durch Kondensatoren gebildet sein.

Zur Lösung der Aufgabe weist die Erfindung die Merkmale des Patentanspruchs 8 auf.

Demzufolge sieht ein Betriebsverfahren für eine elektrische Versorgungsstation mit einem erfindungsgemäßen Gleichspannungswandler vor, dass ein elektrisch betreibbares Fahrzeug an die Versorgungsstation angeschlossen und ein Versorgungsspannungsniveau für das elektrisch betreibbare Fahrzeug ermittelt wird. Der Anschluss des Fahrzeugs an die Versorgungsstation kann beispielsweise über ein Ladekabel erfolgen. Die Bestimmung des Versorgungsspannungsniveaus kann beispielsweise im Rahmen einer Kommunikationsroutine von Fahrzeug und Versorgungsstation erfolgen. Anhand des Versorgungsspannungsniveaus des an die Versorgungsstation angeschlossenen Fahrzeugs wird ein gewünschter Betriebszustand für den Gleichspannungswandler der Versorgungsstation bestimmt, wobei das sekundärseitig bereitgestellte Versorgungsspannungsniveau des Gleichspannungswandlers in einem ersten Betriebszustand geringer ist als in einem zweiten Betriebszustand. Zudem wird ein Schaltzustand des Schaltelements des Gleichspannungswandlers dem gewünschten Betriebszustand des Gleichspannungswandlers entsprechend so eingestellt, dass in dem ersten Betriebszustand das Schaltelement geöffnet ist und sekundärseitig ein erstes Versorgungsspannungsniveau bereitgestellt ist und dass in dem zweiten Betriebszustand der Mittelpunkt des zweiten Sekundärbrückenzweigs mit dem Mittelpunkt des dritten Sekundärbrückenzweigs verbunden ist. Demzufolge wird in dem zweiten Betriebszustand das Schaltelement im Verbindungsleitungsstrang geschlossen und ein höheres, zweites Versorgungsspannungsniveau bereitgestellt.

Nach einer bevorzugten Ausführungsform der Erfindung kann das Betriebsverfahren so ausgebildet sein, dass der Gleichspannungswandler nach dem Trennen des elektrisch betreibbaren Fahrzeugs von der Versorgungsstation stets in einen definierten, gleichen Betriebszustand zurückverbracht wird. Vorteilhaft kann der Gleichspannungswandler dabei stets in den ersten Betriebszustand, in dem sekundärseitig das niedrigere erste Spannungsniveau bereitgestellt ist, verbracht werden.

Nach einer Weiterbildung der Erfindung wird das Schaltelement zum Rückspeisen von Energie in das primärseitige Versorgungsnetz geschlossen. Das Rückspeisen von Energie erfolgt demzufolge stets bei dem höheren zweiten Versorgungsspannungsniveau. Die Kondensatoren des dritten Sekundärbrückenzweigs tragen dabei unmittelbar den Strom beziehungsweise können unmittelbar entladen werden.

Der erfindungsgemäße Gleichspannungswandler kann beispielsweise in einer elektrischen Versorgungsstation und insbesondere in einer zur Bereitstellung elektrischer Energie für ein elektrisch betreibbares Fahrzeug eingerichteten Ladestation verwendet werden.

Eine elektrische Versorgungsstation ist dabei in der Nomenklatur der Erfindung stets für einen bidirektionalen Energiefluss eingerichtet. Es kann demzufolge Energie in einen Energiespeicher eines mit der Versorgungsstation verbundenen Fahrzeugs gespeist werden. Ebenso kann eine Rückspeisung von in dem Energiespeicher des Fahrzeugs bevorrateter Energie in ein primärseitiges Versorgungsnetz erfolgen. Die Rückspeisung kann beispielsweise zur Stabilisierung des Versorgungsnetzes dienen oder vorgesehen werden, um im Falle eines Energieabfalls oder eines anderen Notfalls beim Laden des Fahrzeugs eine Ausgangsspannung der Versorgungsstation innerhalb kurzer Zeit so stark zu reduzieren, dass keine Gefahr für Leib und Leben mehr besteht.

Demgegenüber mag eine Ladestation allein der Bereitstellung elektrischer Energie für das elektrisch betreibbare Fahrzeug dienen. Eine Rückspeisung von Energie in Richtung des Versorgungsnetzes muss vorrichtungsseitig nicht unterstützt werden.

Als elektrisch betreibbare Fahrzeuge im Sinne der Erfindung gelten insbesondere alle Automobile (Pkw, Lkw, Wohnmobile, Zweiräder, Busse, Transporter und andere), Schienenfahrzeuge (insbesondere Lokomotiven), Wasserfahrzeuge (Boote und Schiffe), Luftfahrzeuge sowie Anhänger (Wohnanhänger), mobile Verkaufsstände und andere. Die elektrische Energie kann für Fahrzeuge mit und ohne eigenen Energiespeicher zur Verfügung gestellt werden.

Aus den weiteren Unteransprüchen und der nachfolgenden Beschreibung sind weitere Vorteile, Merkmale und Einzelheiten der Erfindung zu entnehmen. Dort erwähnte Merkmale können jeweils einzeln für sich oder auch in beliebiger Kombination erfindungswesentlich sein. Erfindungsgemäß beschriebene Merkmale und Details des Gleichspannungswandlers gelten selbstverständlich auch im Zusammenhang mit dem erfindungsgemäßen Betriebsverfahren und umgekehrt. So kann auf die Offenbarung zu den einzelnen Erfindungsaspekten stets wechselseitig Bezug genommen werden. Die Zeichnungen dienen lediglich beispielhaft der Klarstellung der Erfindung. Sie haben keinen einschränkenden Charakter.

Es zeigen:

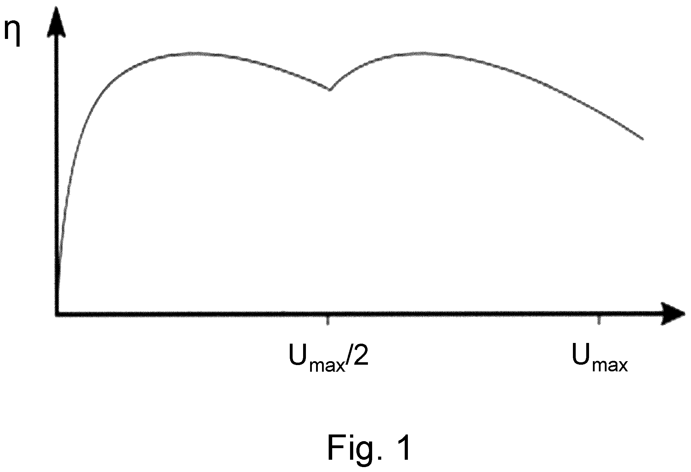

- Fig. 1: einen Wirkungsgrad eines erfindungsgemäßen Gleichspannungswandlers in Abhängigkeit der sekundärseitig bereitgestellten Spannung und

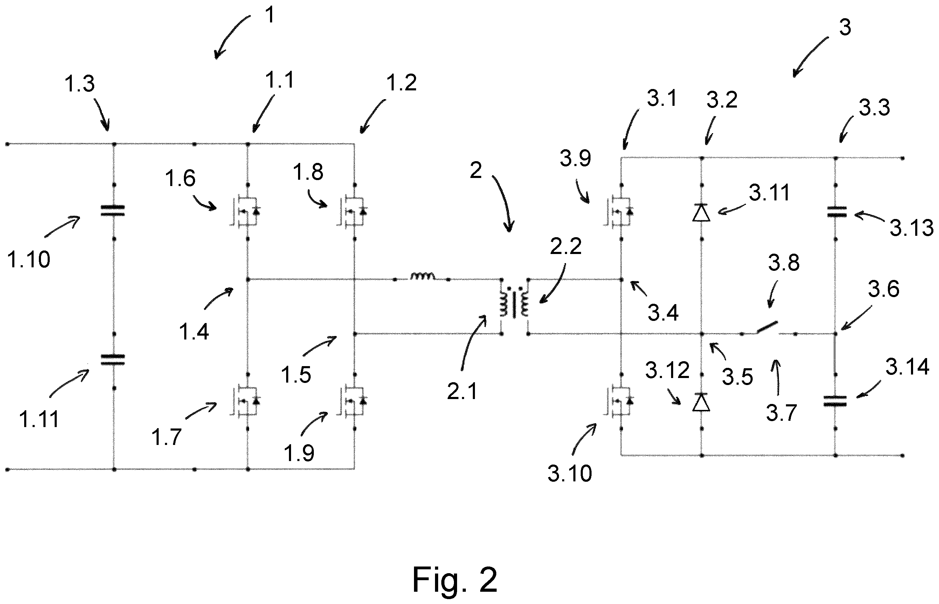

- Fig. 2: ein Schaltbild des erfindungsgemäßen Gleichspannungswandlers.

Ein erfindungsgemäßer Gleichspannungswandler sieht einen Transformator 2 mit einer primärseitigen Wicklung 2.1 und einer sekundärseitigen Wicklung 2.2 vor. Auf einer Eingangs- beziehungsweise Primärseite 1 des Transformators 2 ist eine Vollbrücke mit zwei zueinander parallelen Primärbrückenzweigen 1.1, 1.2 und je zwei in Reihe geschalteten Halbleiterschaltelementen als Halbleiterbauelemente 1.6, 1.7, 1.8, 1.9 vorgesehen. Ein Mittelpunkt 1.4 eines ersten Primärbrückenzweigs 1.1 und ein Mittelpunkt 1.5 eines zweiten Primärbrückenzweigs 1.2 sind hierbei jeweils mit der primärseitigen Wicklung 2.1 des Transformators 2 verbunden.

Zusätzlich ist im vorliegenden Ausführungsbeispiel der Erfindung primärseitig ein dritter Primärbrückenzweig 1.3 mit zwei zueinander in Reihe geschalteten Kondensatoren 1.10, 1.11 vorgesehen. Der dritte Primärbrückenzweig 1.3 ist parallel zu dem ersten Primärbrückenzweig 1.1 und dem zweiten Primärbrückenzweig 1.2 angeordnet.

Auf einer Sekundärseite 3 des Gleichspannungswandlers sind drei zueinander parallele Sekundärbrückenzweige 3.1, 3.2, 3.3 vorgesehen. Ein erster Sekundärbrückenzweig 3.1 sieht zwei in Reihe verschaltete Halbleiterschaltelemente 3.9, 3.10 vor. Ein zweiter Sekundärbrückenzweig 3.2 sieht zwei in Reihe geschaltete Dioden als Halbleiterbauelemente 3.11, 3.12 vor. Ein dritter Sekundärbrückenzweig 3.3 sieht zwei in Reihe verschaltete Kondensatoren 3.13, 3.14 vor.

Die sekundärseitige Wicklung 2.2 des Transformators 2 ist mit einem Mittelpunkt 3.4 des ersten Sekundärbrückenzweigs 3.1 einerseits und einem Mittelpunkt 3.5 des zweiten Sekundärbrückenzweigs 3.2 andererseits verbunden. Zwischen dem Mittelpunkt 3.5 des zweiten Sekundärbrückenzweigs 3.2 einerseits und einem Mittelpunkt 3.6 des dritten Sekundärbrückenzweigs 3.3 andererseits ist ein Verbindungsleitungsstrang 3.7 mit einem Schaltelement 3.8 vorgesehen. Das Schaltelement 3.8 dient der wahlweisen Herstellung beziehungsweise Unterbrechung einer elektrisch leitenden Verbindung zwischen den Mittelpunkten 3.5, 3.6 des zweiten und dritten Sekundärbrückenzweigs 3.2, 3.3. Als Schaltelement 3.8 kann insbesondere ein Relais oder ein Schütz dienen.

Die Kondensatoren 3.13, 3.14 des dritten Sekundärbrückenzweigs 3.3 haben im vorliegenden Ausführungsbeispiel eine gleiche Kapazität. Sie sind darüber hinaus baugleich ausgeführt.

Dem Transformator 2 ist zudem eine Spule beziehungsweise Induktivität zugeordnet. Die Induktivität, die vorliegend exemplarisch auf der Primärseite 2.1 vorgesehen ist, kann durch eine Streuinduktivität des Transformators 2 beziehungsweise seiner Wicklung 2.1, 2.2 definiert oder diskret als ein separates Bauteil ausgebildet sein.

Die Realisierung der Induktivität auf der Primärseite 2.1 ist vorliegend lediglich exemplarisch gewählt. Beispielsweise kann die Induktivität der Sekundärseite 2.2 des Transformators 2 zugeordnet sein oder es können Induktivitäten sowohl primär- als auch sekundärseitig vorgesehen werden.

Eine Lade- beziehungsweise Versorgungsstation mit dem erfindungsgemäßen Gleichspannungswandler kann wahlweise bei einem ersten, niedrigen Versorgungsspannungsniveau von typischerweise 200 V bis 750 V oder bei einem höheren zweiten Versorgungsspannungsniveau von etwa 750 V bis 1.500 V betrieben werden. Eine Umschaltung zwischen den zwei Versorgungsspannungsniveaus erfolgt über das Schaltelement 3.8 in dem Verbindungsleitungsstrang 3.7.

Ist das Schaltelement 3.8 im Verbindungsleitungsstrang 3.7 geöffnet, liegt über den in Reihe geschalteten Kondensatoren 3.13, 3.14 im dritten Sekundärbrückenzweig 3.3 gemeinsam die an der sekundärseitigen Wicklung 2.2 des Transformators 2 anliegende Spannung an. In diesem Fall wirken die Halbleiterschaltelemente 3.9, 3.10 sowie Dioden 3.11, 3.12 im ersten und zweiten Sekundärbrückenzweig 3.1, 3.2 wie eine Vollbrücke zusammen. Wird demgegenüber das Schaltelement 3.8 geschlossen, liegt die an der sekundärseitigen Wicklung 2.2 des Transformators 2 bereitgestellte Spannung einzeln über jedem Kondensator 3.13, 3.14 im dritten Sekundärbrückenzweig 3.3 an. Die in Reihe verschalteten Kondensatoren 3.13, 3.14 stellen demzufolge gemeinsam ausgangsseitig eine doppelt so hohe Spannung wie die sekundärseitige Spannung des Transformators 2 bereit.

Der Wirkungsgrad des erfindungsgemäßen Gleichspannungswandlers ist durch die Bereichsumschaltung stets vergleichsweise hoch. Insbesondere kann durch entsprechende Konfiguration des Gleichspannungswandlers sichergestellt werden, dass Fahrzeuge mit 800 V oder 900 V Ladespannung ähnlich effizient geladen werden können wie Fahrzeuge mit 400 V bis 500 V Ladespannung.

## Patentansprüche

1. Gleichspannungswandler für eine elektrische Versorgungsstation umfassend einen Transformator (2) zur galvanischen Trennung einer Primärseite (1) des Transformators (2) von einer Sekundärseite (3),
- wobei die Primärseite (1) an einen Wechselrichter angeschlossen ist, über den eine Wechselspannung an einer primärseitigen Wicklung (2.1) des Transformators (2) bereitgestellt ist,
- wobei sekundärseitig drei zueinander parallele Sekundärbrückenzweige (3.1, 3.2, 3.3) vorgesehen sind, wobei ein erster Sekundärbrückenzweig (3.1) zwei in Reihe verschaltete Halbleiterschaltelemente (3.9, 3.10), ein zweiter Sekundärbrückenzweig (3.2) zwei in Reihe verschaltete Halbleiterbauelemente (3.11, 3.12) und ein dritter Sekundärbrückenzweig (3.2) zwei in Reihe verschaltete Kondensatoren (3.13, 3.14) vorsieht und wobei eine sekundärseitige Wicklung (2.2) des Transformators (2) mit einem Mittelpunkt (3.4) des ersten Sekundärbrückenzweigs (3.1) einerseits und einem Mittelpunkt (3.5) des zweiten Sekundärbrückenzweigs (3.2) anderseits verbunden ist und
- wobei zwischen dem Mittelpunkt (3.5) des zweiten Sekundärbrückenzweigs (3.2) und einem Mittelpunkt (3.6) des dritten Sekundärbrückenzweigs (3.3) ein Verbindungsleitungsstrang (3.7) vorgesehen ist und der Verbindungsleitungsstrang (3.7) ein Schaltelement (3.8) vorsieht zum wahlweisen Herstellen und Trennen einer Verbindung zwischen diesen Mittelpunkten (3.5, 3.6).

2. Gleichspannungswandler nach Anspruch 1, **dadurch gekennzeichnet, dass** das Schaltelement (3.8) in dem Verbindungsleitungsstrang (3.7) als ein Relais oder ein Schütz oder ein bidirektionales Halbleiterschaltelement ausgebildet ist.

3. Gleichspannungswandler nach Anspruch 1 oder 2, **dadurch gekennzeichnet, dass** die Kondensatoren (3.13, 3.14) im dritten Sekundärbrückenzweig (3.3) eine gleiche Kapazität aufweisen und/oder baugleich ausgeführt sind.

4. Gleichspannungswandler nach einem der Ansprüche 1 bis 3, **dadurch gekennzeichnet, dass** in dem zweiten Sekundärbrückenzweig (3.2) Dioden als Halbleiterbauelemente (3.11, 3.12) und/oder Halbleiterschaltelemente vorgesehen sind.

5. Gleichspannungswandler nach einem der Ansprüche 1 bis 4, **dadurch gekennzeichnet, dass** der primärseitige Wechselrichter eine aktive Brücke vorsieht mit zwei zueinander parallelen Primärbrückenzweigen (1.1, 1.2) und je zwei in Reihe verschalteten Halbleiterbauelementen (1.6, 1.7, 1.8, 1.9) je Primärbrückenzweig (1.1, 1.2) und/oder dass die primärseitige Wicklung (2.1) des Transformators (2) mit einem Mittelpunkt (1.4) eines ersten Primärbrückenzweigs (1.1) einerseits und einem Mittelpunkt (1.5) eines zweiten Primärbrückenzweigs (1.2) anderseits verbunden ist.

6. Gleichspannungswandler nach Anspruch 5, **dadurch gekennzeichnet, dass** primärseitig Halbleiterschaltelemente und/oder Kondensatoren als Halbleiterbauelemente (1.6, 1.7, 1.8, 1.9) vorgesehen sind.

7. Gleichspannungswandler nach Anspruch 5 oder 6, **dadurch gekennzeichnet, dass** primärseitig parallel zu dem ersten Primärbrückenzweig (1.1) und dem zweiten Primärbrückenzweig (1.2) ein dritter Primärbrückenzweig (1.3) vorgesehen ist mit zwei in Reihe verschalteten Kondensatoren (1.10, 1.11).

8. Verfahren zum Betreiben einer elektrischen Versorgungsstation mit einem Gleichspannungswandler nach einem der Ansprüche 1 bis 7, wobei ein elektrisch betreibbares Fahrzeug an die Versorgungsstation angeschlossen, ein Versorgungsspannungsniveau für das elektrisch betreibbare Fahrzeug ermittelt und ein Betriebszustand für den Gleichspannungswandler bestimmt wird, wobei ein sekundärseitig bereitgestelltes Versorgungsspannungsniveau des Gleichspannungswandlers in einem ersten Betriebszustand geringer ist als in einem zweiten Betriebszustand und wobei ein Schaltzustand des Schaltelements (3.8) des Gleichspannungswandlers dem Betriebszustand des Gleichspannungswandlers entsprechend so eingestellt wird, dass in dem ersten Betriebszustand das Schaltelement (3.8) geöffnet ist und/oder dass in dem zweiten Betriebszustand der Mittelpunkt (3.5) des zweiten Sekundärbrückenzweigs (3.2) und der Mittelpunkt (3.6) des dritten Sekundärbrückenzweigs (3.3) verbunden sind.

9. Verfahren nach Anspruch 8, **dadurch gekennzeichnet, dass** der Gleichspannungswandler nach dem Trennen des Fahrzeugs stets in einen gleichen Betriebszustand und bevorzugt stets in den zweiten Betriebszustand verbracht wird.

10. Verfahren nach Anspruch 8 oder 9, **dadurch gekennzeichnet, dass** das Schaltelement (3.8) zum Rückspeisen von Energie in ein primärseitiges Versorgungsnetz geschlossen wird, so dass der Mittelpunkt (3.5) des zweiten Sekundärbrückenzweigs (3.2) und der Mittelpunkt (3.6) des dritten Sekundärbrückenzweigs (3.3) verbunden werden.

11. Verwendung eines Gleichspannungswandlers nach einem der Ansprüche 1 bis 7 in einer elektrischen Versorgungsstation und/oder einer zur Bereitstellung elektrischer Energie für ein elektrisch betreibbares Fahrzeug eingerichteten Ladestation.
